Europäisches Patentamt

European Patent Office

Office européen des brevets

(11) Publication number: 0 357 319
A2

# EUROPEAN PATENT APPLICATION

(21) Application number: 89308497.0

(22) Date of filing: 22.08.89

(51) Int. Cl.⁵: G01J 3/26 , G02F 1/133 , G02B 6/34

(30) Priority: 31.08.88 GB 8820557

(43) Date of publication of application:
07.03.90 Bulletin 90/10

(84) Designated Contracting States:
DE FR IT

(71) Applicant: GEC-Marconi Limited
The Grove Warren Lane
Stanmore Middlesex HA7 4LY(GB)

(72) Inventor: Crickmore, Ian Roger
9 Lynemouth Avenue
Chelmsford Essex(GB)

(74) Representative: Loven, Keith James et al
GEC plc Patent Dept.(Chelmsford Office)
GEC-Marconi Research Centre West
Hanningfield Road
Great Baddow Essex CM2 8HN(GB)

(54) An interferometer.

(57) A Fabry-Perot interferometer contains a twisted nematic liquid crystal (3) and means for applying an electric field across the crystal. The twist is suitably 90°. When a sufficient electric field is applied across the liquid crystal (3) the interferometer becomes insensitive to the polarisation of incident light.

FIG.2

## AN INTERFEROMETER

This invention relates to a Fabry-Perot interferometer.

It is possible to vary the wavelengths of the light emerging from a Fabry-Perot interferometer by varying the separation distance between the two mirrors. However this is undesirable from a point of view of speed and precision.

An alternative way in which tuning has previously been performed is by interposing a liquid crystal between the two semi-reflective mirrors of the Fabry-Perot interferometer and applying a variable electric field across the crystal. This has the effect of varying the average refractive index seen by light of a certain polarisation passing through the interposed liquid crystal, and thereby altering the wavelengths of the emergent light. The arrangement therefore has succeeded in producing an interferometer which is quickly and precisely tunable.

In such an interferometer, the parallel planar surfaces in contact with the liquid crystal are each provided with an alignment layer, which is provided with an alignment orientation, for example, by rubbing. The opposed alignment layers are provided with the same orientation. This has the effect of initially aligning the liquid crystal molecules unidirectionally. When an electric field is applied across the liquid crystal, the molecules tend to rotate in a plane perpendicular to the alignment layers, but extending in the same direction as the alignment orientation, thereby causing a change in the average refractive index seen by light of a certain polarisation passing through the liquid crystal. The phase delay of the light emerging from the cell is proportional to this average refractive index of the liquid crystal, hence by varying the refractive index it is possible to alter the transmission characteristics of the cell. However, such an arrangement has previously required the use of polarised light because the interferometer has been able to function only with light of a polarisation coincident with the orientation of the liquid crystal.

One application of Fabry-Perot interferometers of this type is in optical switching, for example as a demultiplexer. Often information in the form of coded light signals emerging, for example, from a fibre optic are not necessarily polarised. Consequently, only a portion of the light will be of a compatible polarisation and any signal available for processing may require amplification.

According the present invention, there is provided a Fabry-Perot interferometer containing a twisted nematic liquid crystal and means for applying an electric field across the crystal, the degree of twist of the crystal being $(180n + 90)°$ wherein n is 0 or an integer.

It should be noted that the degree of twist may vary slightly with the accuracy of the induced alignment of the alignment layers, for example.

Reference is made to the drawings in which:-

Figure 1 illustrates diagrammatically the arrangement of the alignment layers in an interferometer according to a preferred embodiment of the invention:

Figure 2 illustrates diagrammatically the gradual twist of the liquid crystal molecules in the interferometer of Figure 1, when no field is being applied,.

Figure 3 is an identical diagrammatic view corresponding to Figure 2, but with a field applied to the liquid crystal; and

Figure 4 is a graph of refractive index against applied voltage for an interferometer in accordance with Figures 1 to 3.

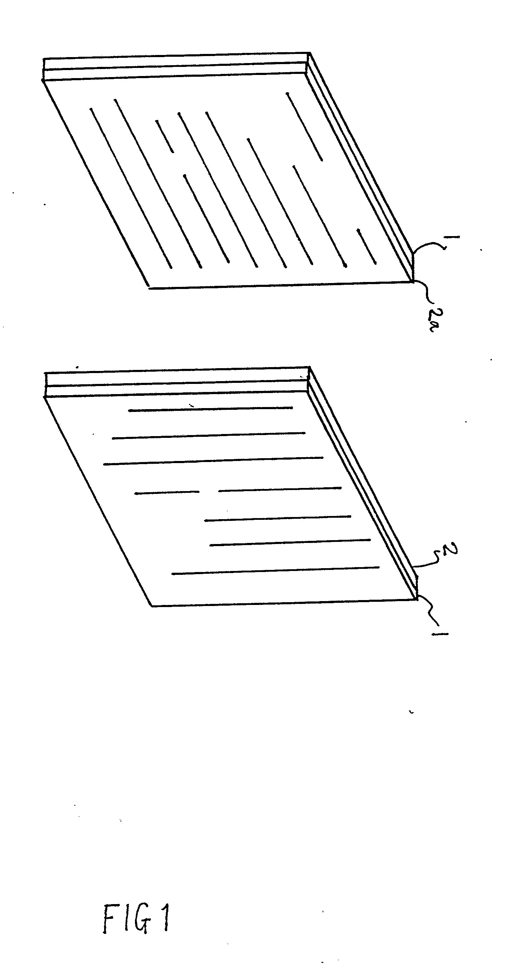

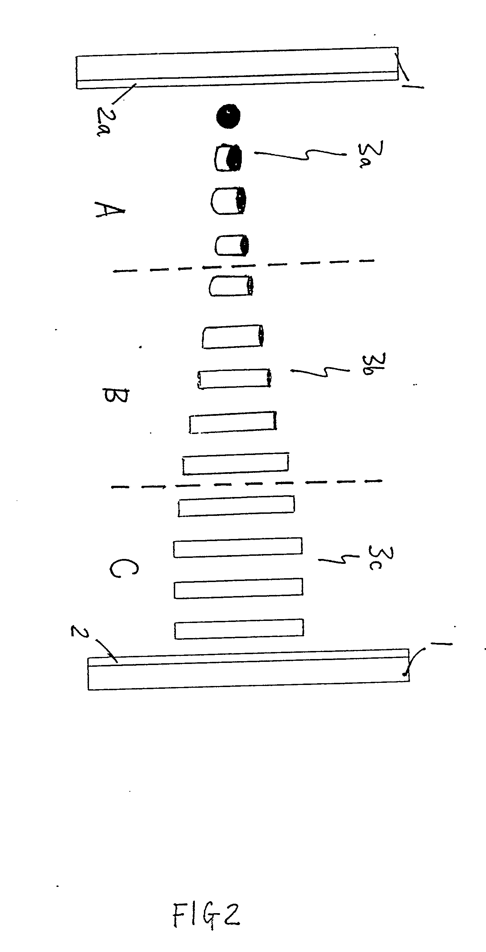

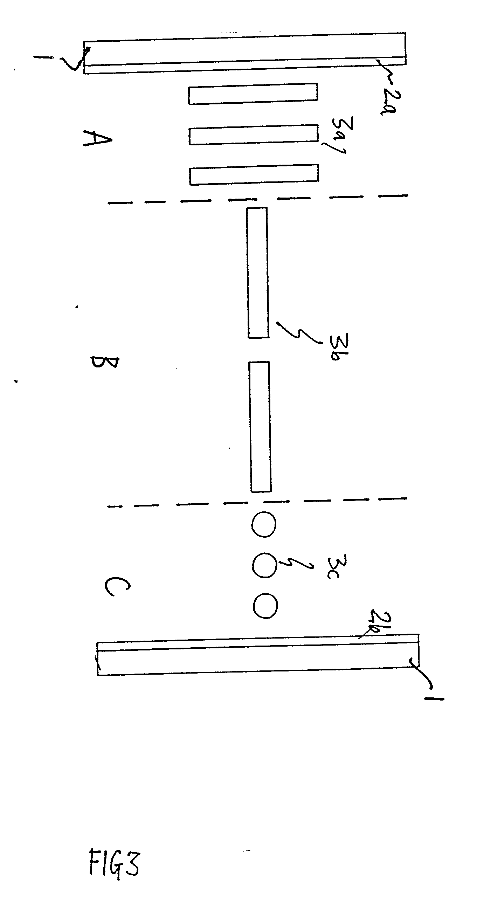

Referring to Figures 1, 2 and 3, the interferometer comprises a pair of semi-reflective mirrors 1 held in a parallel spaced apart relation, the space therebetween being filled with a nematic liquid crystal 3, for example an alignment layer 2 being provided on the internal face of each mirror and in contact with the liquid crystal 3. The alignment layers may be in the form of polyimide films of the order of 100 nm thick, in which the alignment orientation is induced by rubbing, in conventional manner. The orientations are arranged orthogonally, so as to induce an overall 90 degree twist in the liquid crystal 3, as may be seen in Figure 3.

The mirrors may be half-silvered mirrors, the silvered layers serving, if desired, as electrodes for applying an electric field to the liquid crystal, or they may be dielectric mirrors, separate transparent electrodes, for example of ITO, (indium tin oxide), then being provided on the external faces of the mirrors, or on the internal faces, beneath the alignment layers 2.

The use of a twisted nematic liquid crystal within a Fabry-Perot interferometer enables it to be used with unpolarised light, due to the fact that when an electric field is applied, the molecules of the liquid crystal remote from the alignment layers 2 begin to alter their orientation so that their major axes tend to tilt away from places parallel with the alignment layers towards places perpendicular thereto. When a sufficient field is applied the degree of tilt of the molecules becomes such that three regions can be considered to be formed across the thickness of the crystal. In reality, the three regions are not as clearly defined as is suggested by Figure 3, because the molecules within one region are not perfectly parallel, and there is a finite distance over which the orientation of the molecules changes between the regions. However, the simplified view enables the operation of the device to be more readily understood.

In a first region A (Figure 3) adjacent to the first alignment layer 2, the molecules 3a commence a twist, and the polarisations of the incident light tend to follow the twist equally. This region exhibits ordinary and extraordinary refractive indices. The degree of twist is smaller adjacent to the alignment layers, and greater remote from the alignment layers, when a field is applied to the liquid crystal.

In the second, central region B, the molecules tend towards an orientation perpendicular to the alignment layers, and the refractive index is not dependent upon the polarisation of the incident light. In the third region C there is again substantially no tilt of the liquid crystal molecules, but the twist of liquid crystal continues up to the alignment layer 2c, at which alignment is at right angles to that at the opposite alignment layer 2a. The third region again exhibits ordinary and extraordinary refractive indices, but for the opposite polarisation to those in the first region. Thus, light of a polarisation parallel to the initial alignment direction of the first region sees the extraordinary refractive index in the first region, a different, common, refractive index in the second region, and the ordinary refractive index in the third region, while light initially polarised perpendicularly to the initial alignment direction sees the ordinary refractive index in the first region, the different, common, refractive index in the second region, and the extraordinary refractive index in the third region. It will be seen that, overall, the effective refractive index of the liquid crystal is the same for both polarisations, and thus the interferometer becomes polarisation insensitive when a sufficient or threshold electric field is reached.

As the field is increased above the threshold field, the second, central, region of the liquid crystal increases in thickness, while the first and third regions decrease correspondingly, as further molecules tilt towards the perpendicular orientation. Thus, the effective refractive index of the liquid crystal changes with the field, thereby allowing different wavelengths of light to be passed by the interferometer.

At applied fields below the threshold field, a different effect may be observed. It should be noted that a sharp transition between the polarisation-dependent and polarisation-independent operation of the interferometer with the change in applied electric field may not be obtained. When no field is applied, the alignment of the molecules of the liquid crystal twists continuously through 90 degrees from one alignment layer to the other. Ordinary and extraordinary refractive indices are exhibited.

As a sub-threshold field is applied, molecules remote from the alignment layers begin to tilt, as hereinbefore explained. The effect of this is that light polarised in the direction parallel to the initial alignment layer, and following the twist of the crystal, meets the region of tilt and sees a change in the refractive index in this region, whereas the light polarised in a direction perpendicular to the initial alignment layer, while also following the twist of the crystal, sees no change, or a substantially smaller change, in refractive index at the region of twist.

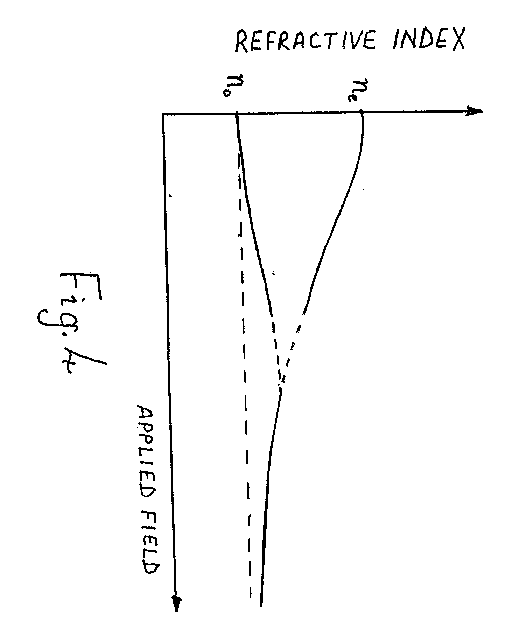

It can be seen that the overall extraordinary refractive index of the crystal will therefore change as the applied field changes, whereas the ordinary refractive index will not change, or will change only slightly. It is thus possible to select a first field below the threshold, at which light of a desired wavelength is transmitted by the interferometer when plane polarised, and a second field above the threshold, at which light of the desired wavelength is transmitted regardless of polarisation. Figure 4 illustrates the changes in refractive index with applied field.

By switching between the two fields (i.e. between the appropriate voltages applied across the crystal), the interferometer may be made to act as a switchable polariser. By varying the selected fields (ie, applied voltages), the effect may be obtained for different wavelengths of light.

This type of filter may be advantageously used to filter stray reflections which are not in the preferred polarisation mode.

It will be appreciated that the invention may be incorporated into demultiplexing and optical processing equipment in either configuration either for use with unpolarised or polarised light respectively.

In the preferred embodiment shown diagramatically in Figure 3, the alignment layers are arranged orthogonally, so as to impose a ninety degree twist in the liquid crystal. However, it will be appreciated that an alternative orientation of alignment layers is possible if a different degree of twist in the nematic crystal is desired, e.g. if a so-called Super Twist liquid crystal were to be used within the interferometer.

The interferometer of the invention may be used as a filter for a broadband radiation detector, for example in detecting laser radiation such as may be used in military range finding equipment.

## Claims

1. A Fabry-Perot interferometer containing a twisted nematic liquid crystal and means for applying an electric field across the crystal, the degree of twist of the crystal being (180n + 90) ° wherein n is 0 or an integer.

2. A Fabry Perot interferometer as claimed in claim 1 wherein means for varying a voltage across the crystal comprises at least one electrode disposed on either side of the crystal.

3. An interferometer as claimed in claim 1 wherein the applied electric field is such that the overall refractive index of the liquid crystal is substantially the same for all polarisations of incident light.

4. An interferometer as claimed in claim 1 wherein the applied electric field is such that the refractive index of the liquid crystal differs according to the polarisation of incident light.

5. An optical polarising switch, comprising an interferometer according to any preceding claim, wherein the means for applying an electric field is adapted to apply an electric field across the crystal selectively at a first voltage such that the liquid crystal is in a polaristation insensitive state or at a second voltage such that the liquid crystal exhibits two different refractive indicies according to the polarisation of the light incident thereon.

FIG 1

FIG 2

FIG3

Fig. 4